# EUROPÄISCHE PATENTSCHRIFT

(11) **EP 3 083 352 B1**
(45) Veröffentlichungstag und Bekanntmachung des Hinweises auf die Patenterteilung: **23.08.2017**
(21) Anmeldenummer: 14824444.5
(22) Anmeldetag: 17.12.2014
(51) Int. Cl.: B60T 17/02, B60T 8/36, B60T 8/40

(54) **HYDRAULIKAGGREGAT**
HYDRAULIC UNIT
UNITÉ HYDRAULIQUE

(30) Priorität: 20.12.2013 DE 102013226817
(43) Veröffentlichungstag der Anmeldung: 26.10.2016
(73) Patentinhaber: Robert Bosch GmbH, 70442 Stuttgart (DE)
(72) Erfinder: GAERTNER, Oliver, 74232 Abstatt (DE)
(86) Internationale Anmeldenummer: PCT/EP2014/078319
(87) Internationale Veröffentlichungsnummer: WO 2015/091700

(56) Entgegenhaltungen:
- WO-A1-2014/019748
- DE-A1-102008 003 456

## Beschreibung

### Stand der Technik

Die Erfindung betrifft ein Hydraulikaggregat insbesondere für eine schlupfregelbare Fahrzeugbremsanlage nach den gattungsbildenden Merkmalen des Anspruchs 1. Ein derartiges Hydraulikaggregat ist beispielsweise bekannt aus der DE 10 2008 003 456 A1.

Dieses bekannte Hydraulikaggregat hat einen Gehäuseblock, mit einer am Gehäuseblock ausgebildeten Pumpenaufnahme und einem in diese Pumpenaufnahme eingesetzten Pumpenelement. Das Pumpenelement bildet mit dem Gehäuseblock eine hydraulisch wirksame Trennstelle, welche einen Niederdruckbereich des Pumpenelements von einem Hochdruckbereich trennt. Diese Trennstelle ist gegliedert in einen Abschnitt, der einen Kraftschluss zwischen Gehäuseblock und Pumpenelement ausbildet und in einen zweiten Abschnitt an dem das Pumpenelement am Gehäuseblock axial anliegt.

Im Anlagebereich liegt eine Schulter einer Laufbuchse zur Führung eines Kolbens des Pumpenelements an einer Gegenschulter an, welche an der inneren Wand der Pumpenaufnahme des Gehäuseblocks ausgebildet ist. Schulter und Gegenschulter sind dargestellt durch einander entgegen gerichtete Bauteilfasen. Diese wirken bei der Herstellung des Kraftschlusses zwischen Gehäuseblock und Pumpenelement als geometrischer Axialanschlag, welcher die auftretenden Einpresskräfte bzw. die maximale Einpresstiefe des Pumpenelements begrenzt.

Beim bekannten Hydraulikaggregat ist der den Kraftschluss bildende Abschnitt dem Niederdruckbereich des Pumpenelements zugewandt, so dass unter hohem Druck stehendes Druckmittel aus dem Hochdruckbereich des Pumpenelements zum Anlagebereich bzw. zur Schulter des Pumpenelements und zur Gegenschulter der Pumpenaufnahme vordringen kann.

Die Laufbuchse des Pumpenelements besteht aus Stahl, während der Gehäuseblock aus einer Aluminiumlegierung hergestellt ist. Zudem sind die Schulter sowie die Gegenschulter aufgrund ihrer Wirkung als mechanischer Axialanschlag beim Einpressen des Pumpenelements in die Pumpenaufnahme mechanischen Spannungen ausgesetzt. Die Summe dieser Umstände kann dazu führen, dass beim zitierten Stand der Technik unerwünschte Korrosion am Anschlagbereich der Trennstelle, also zwischen der Schulter und der Gegenschulter bzw. zwischen dem Gehäuseblock und dem Pumpenelement auftreten kann.

### Vorteile der Erfindung

Die Erfindung nach den Merkmalen des Anspruchs 1 weist demgegenüber den Vorteil auf, dass Korrosion im Anschlagbereich von Pumpenelement und Pumpenaufnahme verhindert wird. Dies wird dadurch erreicht, dass eine vorgesehene Trennstelle zwischen Hochdruckbereich und Niederdruckbereich des Pumpenelements einen Kraftschluss bildenden Abschnitt aufweist, der erfindungsgemäß dem Hochdruckbereich des Pumpenelements zugewandt ist. Der den Kraftschluss bildende Abschnitt verhindert, dass unter hohem Druck stehendes Druckmittel zum Anschlagbereich der Trennstelle vordringen kann. Eine Korrosion auslösende Wechselwirkung der unterschiedlichen Werkstoffe von Gehäuseblock und Pumpenelement mit der überlagerten hohen Beanspruchung des mechanischen Axialanschlags und dem unter hohen Druck stehenden Druckmittel als Elektrolyt kann sich dadurch nicht einstellen. Mit anderen Worten ermöglicht die Erfindung eine weitgehende Trennung des mechanisch hoch belasteten Axialanschlags zwischen Pumpenelement und Gehäuseblock von Druckmittel.

Die vorgeschlagene Maßnahme ist ohne Zusatzaufwand umsetzbar und wirkt sich weder in einem zusätzlichen Bauraumbedarf noch in höheren Teile- oder Montagekosten aus.
Weitere Vorteile oder vorteilhafte Weiterbildungen der Erfindung ergeben sich aus den Unteransprüchen und/oder der nachfolgenden Beschreibung.

Besonders vorteilhaft ist, wenn die Trennstelle zwischen Hochdruckbereich und Niederdruckbereich des Pumpenelements in wenigstens drei Abschnitte gegliedert ist, von denen zwei Abschnitte jeweils einen Kraftschluss zwischen Pumpenelement und Gehäuseblock ausbilden, ein dritter Abschnitt als Axialanschlag des Pumpenelements am Gehäuseblock wirkt und dieser dritte Abschnitt zwischen den beiden kraftschlüssigen Abschnitten angeordnet ist. Durch diese Anordnung kann weder Druckmittel aus dem Hochdruckbereich des Pumpenelements noch Druckmittel aus dem Niederdruckbereich des Pumpenelements zu dem den Axialanschlag ausbildenden Abschnitt der Trennstelle vordringen. Der Axialanschlag bzw. der dritte Abschnitt der Trennstelle ist also weitgehend frei von Druckmittel bzw. trocken, wodurch sich Korrosionseffekte zwischen den Bauteilen noch wirksamer verhindern lassen.

Fertigungstechnisch besonders einfach lässt sich ein Kraftschluss zwischen Pumpenelement und Gehäuseblock darstellen, indem die Außenabmessungen des Pumpenelements auf die Innenabmessungen der Pumpenaufnahme derart abgestimmt sind, dass das Pumpenelement mit seiner Montage in die Pumpenaufnahme wenigstens abschnittsweise in diese Pumpenaufnahme eingepresst ist. Zu einer Überwachung des Einpressvorgangs bei der Montage, z.B. hinsichtlich Einpresskraft oder Einpressmaß des Pumpenelements in die Pumpenaufnahme, ist vorteilhaft eine Schulter am Pumpengehäuse oder am Pumpenelement vorgesehen, die mit einer Gegenschulter am Pumpenelement oder am Pumpengehäuse zusammenwirkt. Schulter und Gegenschulter können dabei relativ zu einer Längsachse des Pumpenelements rechtwinklig oder angeschrägt ausgeführt werden, wobei die rechtwinklige Ausführung vorteilhafter Weise Radialbewegungen, beispielsweise bedingt durch unterschiedliche Wärmeausdehnung der Bauelemente, verhindert.

### Zeichnung

Ausführungsbeispiele der Erfindung sind in der Zeichnung dargestellt und in der nachfolgenden Beschreibung näher erläutert.

Die Figur 1 offenbart ein erstes Ausführungsbeispiel der Erfindung, welches anhand eines Längsschnitts durch ein in eine Pumpenaufnahme eines Gehäuseblocks eingesetztes Pumpenelement dargestellt ist.

Figur 2 zeigt ein zweites Ausführungsbeispiel der Erfindung anhand einer Detailskizze, welche eine Trennstelle zwischen einer Laufbuchse des Pumpenelements und einer Pumpenaufnahme eines Gehäuseblocks darstellt.

### Beschreibung der Ausführungsbeispiele

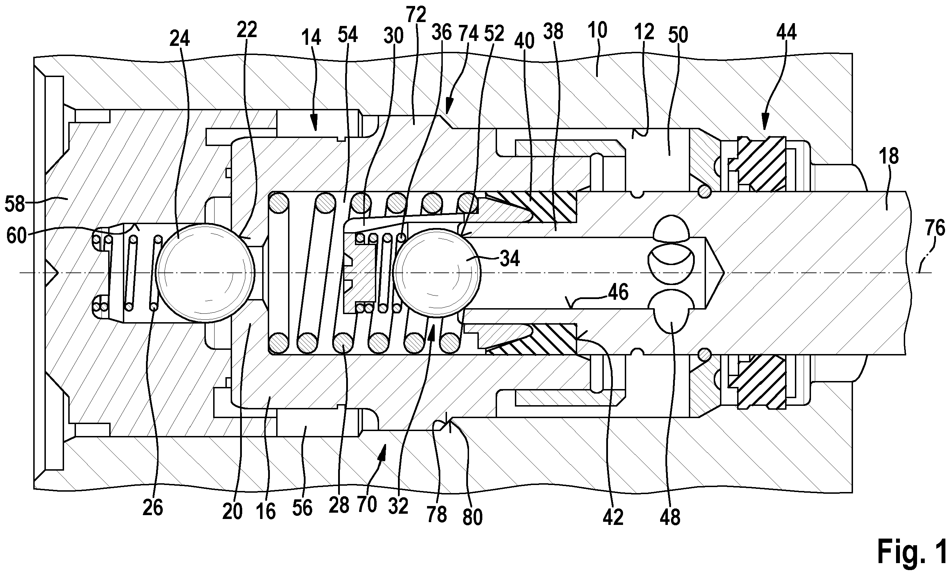

In Figur 1 ist ein Gehäuseblock eines Hydraulikaggregats mit der Bezugsziffer 10 bezeichnet. Dieser Gehäuseblock 10 ist mit einer Pumpenaufnahme 12 versehen, in die ein Pumpenelement 14 eingebaut ist. Bei der Pumpenaufnahme 12 handelt es sich um eine zu einer Außenseite des Gehäuseblocks 10 hin offene Bohrung, die in ihrem Innendurchmesser von außen nach innen mehrfach abgesetzt bzw. zurückgenommen ist.

Das in die Pumpenaufnahme 12 eingesetzte Pumpenelement 14 umfasst unter anderem eine Laufbuchse 16, in der ein Kolben 18 des Pumpenelements 14 hin und her beweglich geführt aufgenommen ist. Die Laufbuchse 16 ist topfförmig ausgebildet und wird an einem ihrer Enden von einem Laufbuchsenboden 20 verschlossen. Im Zentrum dieses Laufbuchsenbodens 20 befindet sich eine Durchgangsöffnung, die außerhalb der Laufbuchse 16 zu einem Auslassventilsitz 22 weitergebildet ist. Zur Steuerung dieses Auslassventilsitzes 22 ist ein Auslassventilschließglied 24 in Form einer Kugel vorgesehen, das von einer Auslassventilfeder 26 gegen den Auslassventilsitz 22 beaufschlagt ist. In der Darstellung liegt das Auslassventilschließglied 24 am Auslassventilsitz 22 an und sperrt diesen ab.

Das dem Laufbuchsenboden 20 gegenüberliegende Ende der Laufbuchse 16 ist offen und der im Inneren der Laufbuchse 16 aufgenommene Kolben 18 steht abschnittsweise aus dieser Öffnung vor. Dies wird bewirkt von einer den Kolben 18 beaufschlagenden Rückstellfeder 28, die im Inneren der Laufbuchse 16 angeordnet ist und die sich auf der Innenseite des Laufbuchsenbodens 20 abstützt. Mit ihrem zweiten Ende greift die Rückstellfeder 28 an einem Ventilkäfig 30 eines Einlassventils 32 des Pumpenelements 14 an. Der Ventilkäfig 30 ist am laufbuchsenseitigen Ende des Kolbens 18 befestigt und nimmt in seinem Inneren ein Einlassventilschließglied 34 sowie eine Einlassventilfeder 36 zur Betätigung dieses Einlassventilschließglieds 34 auf. Der Ventilkäfig 30 umschließt einen am Kolben 18 einteilig ausgebildeten Axialfortsatz 38, dessen Außendurchmesser gegenüber dem des Kolbens 18 zurückgenommen ist. Der Axialfortsatz 38 nimmt einen Dichtungsring 40 auf, welcher der Abdichtung des Kolbens 18 in der Laufbuchse 16 dient. Vorgespannt wird dieser Dichtungsring 40 von der Rückstellfeder 28 des Kolbens 18, welche über den Ventilkäfig 30 an einer ersten Stirnseite des Dichtungsrings 40 angreift. Die dazu gegenüberliegende zweite Stirnseite des Dichtungsrings 40 liegt an einer rechtwinkligen Schulter 42 des Kolbens 18 an. Diese Schulter 42 ergibt sich am Ende des Axialfortsatzes 38 des Kolbens 18.

Der aus der Laufbuchse 16 vorstehende Abschnitt des Kolbens 18 wird über eine gehäuseblockseitig angeordnete Dicht-/Führungsringanordnung 44 in der Pumpenaufnahme 12 geführt und abgedichtet.

Der Kolben 18 ist mit einer sacklochartigen Längsbohrung 46 versehen, die zum Inneren der Laufbuchse 16 hin ausmündet. Diese Längsbohrung 46 wird durch mehrere außerhalb der Laufbuchse 16 ausmündende und über den Umfang des Kolbens 18 verteilt angeordnete Querbohrungen 48 mit einem den Kolben 18 umgebenden und letztlich zu einem Pumpeneinlass (nicht gezeigt) hinführenden Niederdruckbereich 50 des Pumpenelements 14 verbunden. Das offene Ende der Längsbohrung 46 bildet einen Einlassventilsitz 52, dessen Querschnitt vom Einlassventilschließglied 34 gesteuert ist. Zwischen dem Einlassventilsitz 52 und dem Auslassventilsitz 22 befindet sich ein Pumpenraum 54, dessen Volumen sich abhängig von der Bewegungsrichtung des Kolbens 18 vergrößert oder verkleinert.

Stromabwärts des Auslassventilsitzes 22 befindet sich ein Hochdruckbereich 56 des Pumpenelements 14, in den aus dem Auslassventilsitz 22 abströmendes Druckmittel einströmt. Der Hochdruckbereich 56 des Pumpenelements 14 ist letztlich mit einem nicht gezeigten Pumpenauslass kontaktiert. Gegenüber der Umgebung ist der Hochdruckbereich 56 des Pumpenelements 14 durch einen Verschlussstopfen 58 abgedichtet, der in das zur Umgebung hin offene Ende der Pumpenaufnahme 12 eingepresst und zusätzlich von außen mit dem Gehäuseblock 10 verstemmt ist. Der Verschlussstopfen 58 bildet einen zum Inneren der Pumpenaufnahme 12 ausgerichteten Aufnahmeraum 60 für das Auslassventilschließglied 24 und für die Auslassventilschließfeder 26 aus.

Das Pumpenelement 14 bildet mit der Pumpenaufnahme 12 eine Trennstelle 70 aus, die zwischen dem Niederdruckbereich 50 und dem Hochdruckbereich 56 des Pumpenelements 14 angeordnet ist, um diese beiden Bereiche hydraulisch voneinander zu trennen. Die Trennstelle 70 gliedert sich in Abschnitte. In einem ersten Abschnitt 72 ist das Pumpenelement 14 mit der Pumpenaufnahme 12 kraftschlüssig verbunden und in einem sich unmittelbar an den ersten Abschnitt 72 anschließenden zweiten Abschnitt 74 liegt das Pumpenelement 14 axial an der Pumpenaufnahme 12 des Gehäuseblocks 10 an. Der zweite Abschnitt 74 bildet somit einen Axialanschlag für das Pumpenelement 14 in der Pumpenaufnahme 12. Erfindungsgemäß ist der erste, einen Kraftschluss ausbildende Abschnitt 72 dem Hochdruckbereich 56 des Pumpenelements 14 zugewandt.

Im Bereich des den Kraftschluss ausbildenden ersten Abschnitts 72 der Trennstelle 70 ist die Pumpenaufnahme 12 in ihrem Innendurchmesser reduziert. Ein Übergang vom durchmessergrößeren zum durchmesserkleineren Innendurchmesser der Pumpenaufnahme 12 ist als Ringfase ausgeführt, um die Montage des Pumpenelements 14 zu vereinfachen. Die Laufbuchse 16 des Pumpenelements 14 weist im ersten Abschnitt 72 der Trennstelle 70 einen vergrößerten Außendurchmesser auf. Der Außendurchmesser der Laufbuchse 16 ist dabei auf den Innendurchmesser der Pumpenaufnahme 12 derart abgestimmt, dass sich mit einem Einbau des Pumpenelements 14 in die Pumpenaufnahme 12 zwischen beiden Teilen eine Pressverbindung einstellt, die entlang des Umfangs des Pumpenelements 14 umläuft.

Der zweite Abschnitt 74 der Trennstelle 70 grenzt in Richtung einer Längsachse 76 des Pumpenelements 14 unmittelbar an den oben beschriebenen ersten Abschnitt 72 an. Er wird gebildet durch eine ringförmige Schulter 78, die am Innenumfang der Pumpenaufnahme 12 oder am Außenumfang der Laufbuchse 16 dargestellt ist und eine entsprechend geformte Gegenschulter 80, welche umlaufend am Außenumfang der Laufbuchse 16 oder am Innenumfang der Pumpenaufnahme 12 ausgebildet ist. Schulter 78 und Gegenschulter 80 bilden bei diesem Ausführungsbeispiel Bauteilfasen, die relativ zur Längsachse 76 des Pumpenelements 14 einen Winkel zwischen 30° und 60°, vorzugsweise einen Winkel von 45° einschließen.

Der zweite Abschnitt 74 der Trennstelle 70 stellt einen mechanischen Anschlag beim Einpressen des Pumpenelements 14 in die Pumpenaufnahme 12 dar. Er liegt erfindungsgemäß abgewandt vom Hochdruckbereich 56 des Pumpenelements 14 und kommt durch den erfindungsgemäß dem Hochdruckbereich 56 des Pumpenelements 14 zugewandten und einen Kraftschluss ausbildenden ersten Abschnitt 72 der Trennstelle 70 nicht mit unter Hochdruck stehendem Druckmittel in Berührung.

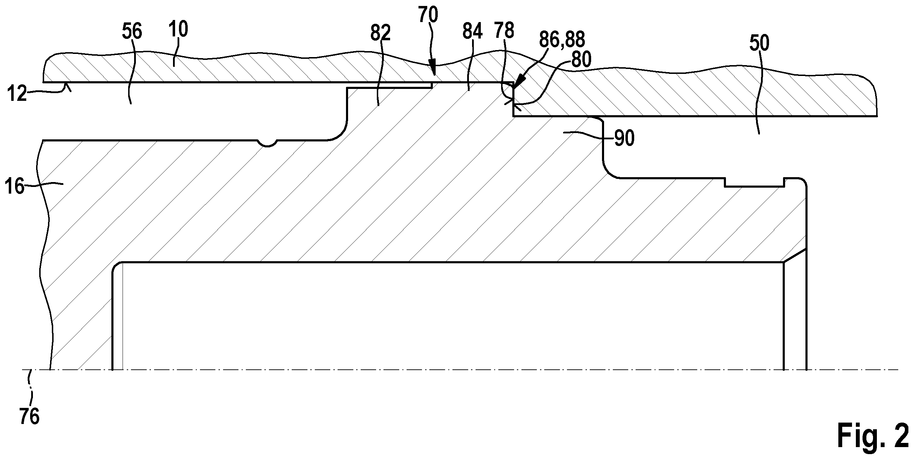

Figur 2 zeigt ein zweites Ausführungsbeispiel der Erfindung. Erkennbar ist ein Abschnitt einer Laufbuchse 16, die in eine Pumpenaufnahme 12 eingesetzt ist. Die Laufbuchse 16 bildet mit der Pumpenaufnahme 12 eine ebenfalls aus mehreren Abschnitten oder Zonen bestehende Trennstelle 70 zwischen dem Hochdruckbereich 56 und dem Niederdruckbereich 50 eines nicht detailliert dargestellten Pumpenelements 14 aus. Ausgehend vom Hochdruckbereich 56 des Pumpenelements 14 und in Richtung der Längsachse 76 dieses Pumpenelements 14 betrachtet, sind insgesamt vier Abschnitte vorhanden. In Abschnitt eins 82 bildet die Laufbuchse 16 des Pumpenelements 14 eine Spaltdichtung mit der Pumpenaufnahme 12 des Gehäuseblocks 10 aus. Dies wird erreicht durch einen Außendurchmesser der Laufbuchse 16, der in dieser Zone (Abschnitt eins) nur geringfügig kleiner ist, als der zugeordnete Innendurchmesser der Pumpenaufnahme 12. In einem nachfolgenden Abschnitt zwei 84 besteht zwischen Laufbuchse 16 und Pumpenaufnahme 12 ein Kraftschluss bzw. eine Pressverbindung. Dazu ist der Außendurchmesser der Laufbuchse 16 geringfügig größer bemessen, als der zugeordnete Innendurchmesser der Pumpenaufnahme 12. In einem Abschnitt drei 86 liegt das Pumpenelement an einem Axialanschlag 88 an. Dazu bildet die Pumpenaufnahme 12 eine Schulter 78 aus, an der eine Gegenschulter 80 der Laufbuchse 16 anliegt. Schulter 78 und Gegenschulter 80 bilden ebene Flächen, die, in der Zeichenebene betrachtet, unter Einschluss eines rechten Winkels (90°) zu einer Längsachse des Pumpenelements 14 bzw. der Laufbuchse 16 des Pumpenelements 14 verlaufen. An diesem Axialanschlag 88 schlägt das Pumpenelement 14 mit seiner Laufbuchse 16 an, wenn diese mit einer festgelegten Einpresstiefe in die Pumpenaufnahme 12 eingesetzt worden ist. Ein sich darüber hinaus axial anschließender Abschnitt vier 90 bildet erneut einen Kraftschluss zwischen Laufbuchse 16 und Pumpenaufnahme 12 indem der Durchmesser der Laufbuchse 16 geringfügig größer als der entsprechende Innendurchmesser der Pumpenaufnahme 12 bemessen ist. Die Durchmesser in den beiden Kraftschluss bildenden Abschnitten zwei und vier 84, 90 sind unterschiedliche groß bemessen, wobei der Durchmesser in Abschnitt zwei 84 größer als der Durchmesser in Abschnitt vier 90 ausgeführt ist. Die Durchmesseränderung zwischen den Abschnitten zwei und vier 84, 90 bildet bei diesem Ausführungsbeispiel die rechtwinklige Schulter 78 aus, gegen welche die entsprechend rechtwinklig ausgebildete Gegenschulter 80 der Laufbuchse 16 anschlägt, sobald Letztere ihre vorgesehene Einpresstiefe erreicht hat.

Die beiden jeweils einen Kraftschluss zwischen Pumpenelement 14 und Pumpenaufnahme 12 bildenden Abschnitte zwei und vier 84, 90 verhindern bei diesem zweiten Ausführungsbeispiel, dass Druckmittel aus dem Hochdruckbereich 56 oder Druckmittel aus dem Niederdruckbereich 50 des Pumpenelements 14 zum Axialanschlag 88 zwischen Pumpenelement 14 und Pumpenaufnahme 12 bildenden Abschnitt drei 86 der Trennstelle 70 gelangt. Sie dichten demnach Abschnitt drei 86 gegen eintretendes Druckmittel ab und verhindern dadurch Korrosion zwischen Schulter 78 und Gegenschulter 80 an Pumpenelement 14 und/oder an der Pumpenaufnahme 12.

## Patentansprüche

1. Hydraulikaggregat, insbesondere für eine schlupfregelbare Fahrzeugbremsanlage, mit einem Gehäuseblock (10), einer am Gehäuseblock (10) ausgebildeten Pumpenaufnahme (12) und einem in die Pumpenaufnahme (12) eingesetzten Pumpenelement (14), wobei das Pumpenelement (14) mit dem Gehäuseblock (10) eine Trennstelle (70) ausbildet, die einen mit einem Pumpeneinlass kontaktierten Niederdruckbereich (50) des Pumpenelements (14) von einem mit einem Pumpenauslass kontaktierten Hochdruckbereich (56) des Pumpenelements (14) hydraulisch trennt und wobei die Trennstelle (70) wenigstens einen ersten Abschnitt (72; 84), an dem das Pumpenelement (14) mit dem Gehäuseblock (10) durch einen Kraftschluss verbunden ist und einen zweiten Abschnitt (74; 86), an dem das Pumpenelement (14) mit dem Gehäuseblock (10) einen Axialanschlag ausbildet, aufweist,
**dadurch gekennzeichnet,**
**dass** der den Kraftschluss ausbildende Abschnitt (72; 84) der Trennstelle (70) dem Hochruckbereich (56) des Pumpenelements (14) zugewandt liegt.

2. Hydraulikaggregat nach Anspruch 1, **dadurch gekennzeichnet, dass** die Trennstelle (70) einen zusätzlichen dritten Abschnitt (90) aufweist, an dem das Pumpenelement (14) durch einen Kraftschluss mit dem Gehäuseblock (10) verbunden ist, wobei dieser dritte Abschnitt (90) der Trennstelle (70) dem Niederdruckbereich (50) des Pumpenelements (14) zugewandt liegt und wobei der den Axialanschlag ausbildende zweite Abschnitt (74; 86) der Trennstelle (70) zwischen den Kraftschluss bildenden ersten und zweiten Abschnitten (84, 90) der Trennstelle (70) angeordnet ist.

3. Hydraulikaggregat nach Anspruch 1 oder 2, **dadurch gekennzeichnet, dass** die einen Kraftschluss bildenden Abschnitte (72; 84) und der einen Axialanschlag (88) bildende Abschnitt (74; 86) der Trennstelle (70) in Richtung einer Längsachse (76) des Pumpenelements (14) unmittelbar aneinander angrenzen.

4. Hydraulikaggregat nach einem der Ansprüche 1 bis 3, **dadurch gekennzeichnet, dass** der Kraftschluss zwischen Pumpenelement (14) und Pumpenaufnahme (12) am Gehäuseblock (10) als Pressverbindung zwischen beiden Bauteilen ausgebildet ist.

5. Hydraulikaggregat nach Anspruch 4, **dadurch gekennzeichnet, dass** der einen Axialanschlag (88) bildende Abschnitt (74; 86) der Trennstelle (70) eine am Gehäuseblock (10) oder am Pumpenelement (14) ausgebildete Schulter (78) und eine am Pumpenelement (14) oder am Gehäuseblock (10) ausgebildete Gegenschulter (80) umfasst.

6. Hydraulikaggregat nach Anspruch 5, **dadurch gekennzeichnet, dass** die Schulter (78) und die Gegenschulter (80) mit der Längsachse (76) des Pumpenelements (14) einen Winkel von 90° oder einen Winkel zwischen 30° und 60°, vorzugsweise von 45°, einschließen.

7. Hydraulikaggregat nach einem der Ansprüche 1 bis 6, **dadurch gekennzeichnet, dass** das Pumpenelement (14) mit einer Laufbuchse (16) zur Führung eines Kolbens (18) des Pumpenelements (14) ausgestattet ist und dass die Laufbuchse (16) mit einer Innenwandung der Pumpenaufnahme (12) des Gehäuseblocks (10) die Trennstelle (70) ausbildet.

8. Hydraulikaggregat nach einem der Ansprüche 1 bis 7, **dadurch gekennzeichnet, dass** die Pumpenaufnahme (12) am Gehäuseblock (10) von einer nach außen offenen und in ihrem Innendurchmesser abgestuften Bohrung gebildet ist, wobei das offene Ende der Pumpenaufnahme (12) mit einem Verschlussstopfen (58) verschlossen ist, an welchem das Pumpenelement (14) abgestützt ist.

## Claims

1. Hydraulic unit, particularly for a vehicle brake system with traction control, having a housing block (10), a pump socket (12) formed on the housing block (10), and a pump element (14) inserted into the pump socket (12), wherein the pump element (14) together with the housing block (10) forms a separator (70), which hydraulically separates a low-pressure area (50) of the pump element (14) in contact with a pump inlet from a high-pressure area (56) of the pump element (14) in contact with a pump outlet, and wherein the separator (70) comprises at least a first portion (72;84), on which the pump element (14) is connected to the housing block (10) by a non-positive connection, and a second portion (74; 86), on which the pump element (14) together with the housing block (10) forms an axial stop,
**characterized in that**
the portion (72;84) of the separator (70) forming the non-positive connection lies facing the high-pressure area (56) of the pump element (14).

2. Hydraulic unit according to Claim 1, **characterized in that** the separator (70) comprises an additional third portion (90), on which the pump element (14) is connected by a non-positive connection to the housing block (10), wherein this third portion (90) of the separator (70) lies facing the low-pressure area (50) of the pump element (14) and wherein the second portion (74;86) of the separator (70) forming the axial stop is arranged between the first and second portions (84;90) of the separator (70) forming a non-positive connection.

3. Hydraulic unit according to Claim 1 or 2, **characterized in that** the portions (72;84) forming a non-positive connection and the portion (74;86) of the separator (70) forming an axial stop (88) directly adjoin one another in the direction of a longitudinal axis (76) of the pump element (14).

4. Hydraulic unit according to one of Claims 1 to 3, **characterized in that** the non-positive connection between the pump element (14) and the pump socket (12) on the housing block (10) is formed as a press-fit connection between the two components.

5. Hydraulic unit according to Claim 4, **characterized in that** the portion (74;86) of the separator (70) forming an axial stop (88) comprises a shoulder (78), formed on the housing block (10) or on the pump element (14), and a counter-shoulder (80) formed on the pump element (14) or on the housing block (10).

6. Hydraulic unit according to Claim 5, **characterized in that** the shoulder (78) and the counter-shoulder (80) enclose an angle of 90° or an angle of between 30° and 60°, preferably of 45°, with the longitudinal axis (76) of the pump element (14).

7. Hydraulic unit according to one of Claims 1 to 6, **characterized in that** the pump element (14) is equipped with a liner (16) for guiding a piston (18) of the pump element (14) and that the liner (16), together with an inside wall of the pump socket (12) of the housing block (10), forms the separator (70).

8. Hydraulic unit according to one of Claims 1 to 7, **characterized in that** the pump socket (12) on the housing block (10) is formed by a bore, which is open towards to the outside and stepped in its inside diameter, wherein the open end of the pump socket (12) is closed by a plug (58), on which the pump element (14) is supported.

## Revendications

1. Unité hydraulique, en particulier pour un système de freinage de véhicule à patinage réglable, avec un bloc de boîtier (10), un logement de pompe (12) formé sur le bloc de boîtier (10) et un élément de pompe (14) inséré dans le logement de pompe (12), dans laquelle l'élément de pompe (14) forme avec le bloc de boîtier (10) un point de séparation (70), qui sépare au point de vue hydraulique une zone à basse pression (50) de l'élément de pompe (14) en contact avec une entrée de pompe d'une zone à haute pression (56) de l'élément de pompe (14) en contact avec une sortie de pompe et dans laquelle le point de séparation (70) présente au moins une première partie (72; 84), sur laquelle l'élément de pompe (14) est assemblé au bloc de boîtier (10) par adhérence et une deuxième partie (74; 86), sur laquelle l'élément de pompe (14) forme avec le bloc de boîtier (10) une butée axiale,
**caractérisée en ce que** la partie (72; 84) du point de séparation (70) formant l'assemblage par adhérence se trouve à proximité de la zone à haute pression (56) de l'élément de pompe (14).

2. Unité hydraulique selon la revendication 1, **caractérisée en ce que** le point de séparation (70) présente une troisième partie supplémentaire (90), sur laquelle l'élément de pompe (14) est assemblé au bloc de boîtier (10) par adhérence, dans laquelle cette troisième partie (90) du point de séparation (70) est située à proximité de la zone à basse pression (50) de l'élément de pompe (14) et dans laquelle la deuxième partie (74; 86) du point de séparation (70) formant la butée axiale est disposée entre les première et deuxième parties (84, 90) du point de séparation (70) formant les assemblages par adhérence.

3. Unité hydraulique selon la revendication 1 ou 2, **caractérisée en ce que** les parties (72; 84) formant un assemblage par adhérence et la partie (74; 86) formant une butée axiale (88) du point de séparation (70) sont directement adjacentes l'une à l'autre dans la direction d'un axe longitudinal (76) de l'élément de pompe (14).

4. Unité hydraulique selon l'une quelconque des revendications 1 à 3, **caractérisée en ce que** l'assemblage par adhérence entre l'élément de pompe (14) et le logement de pompe (12) sur le bloc de boîtier (10) est réalisé en forme d'assemblage à ajustement serré entre les deux composants.

5. Unité hydraulique selon la revendication 4, **caractérisée en ce que** la partie (74; 86) du point de séparation (70) formant une butée axiale (88) comprend un épaulement (78) formé sur le bloc de boîtier (10) ou sur l'élément de pompe (14) et un épaulement opposé (80) formé sur l'élément de pompe (14) ou sur le bloc de boîtier (10).

6. Unité hydraulique selon la revendication 5, **caractérisée en ce que** l'épaulement (78) et l'épaulement opposé (80) forment avec l'axe longitudinal (76) de l'élément de pompe (14) un angle de 90° ou un angle compris entre 30° et 60°, de préférence de 45°.

7. Unité hydraulique selon l'une quelconque des revendications 1 à 6, **caractérisée en ce que** l'élément de pompe (14) est équipé d'une chemise de cylindre (16) pour le guidage d'un piston (18) de l'élément de pompe (14) et **en ce que** la chemise de cylindre (16) forme avec une paroi intérieure du logement de pompe (12) du bloc de boîtier (10) le point de séparation (70).

8. Unité hydraulique selon l'une quelconque des revendications 1 à 7, **caractérisée en ce que** le logement de pompe (12) sur le bloc de boîtier (10) est formé par un alésage ouvert vers l'extérieur et présentant un diamètre intérieur étagé, dans laquelle l'extrémité ouverte du logement de pompe (12) est fermée par un bouchon de fermeture (58), sur lequel l'élément de pompe (14) est appuyé.
